# EUROPÄISCHE PATENTSCHRIFT

(11) **EP 3 667 568 B1**
(45) Veröffentlichungstag und Bekanntmachung des Hinweises auf die Patenterteilung: **29.04.2026**
(21) Anmeldenummer: 19209887.9
(22) Anmeldetag: 19.11.2019
(51) Int. Cl.: G06N 3/04, B60W 50/06

(54) **KONFIGURATION EINES STEUERUNGSSYSTEMS FÜR EIN ZUMINDEST TEILAUTONOMES KRAFTFAHRZEUG**
CONFIGURATION OF A CONTROL SYSTEM FOR AN AT LEAST PARTIALLY AUTONOMOUS MOTOR VEHICLE
CONFIGURATION D'UN SYSTÈME DE COMMANDE POUR UN VÉHICULE AUTOMOBILE AU MOINS PARTIELLEMENT AUTONOME

(30) Priorität: 05.12.2018 DE 102018221063
(43) Veröffentlichungstag der Anmeldung: 17.06.2020
(73) Patentinhaber: Volkswagen AG, 38440 Wolfsburg (DE)
(72) Erfinder: Hüger, Fabian, 38302 Wolfenbüttel (DE); Schlicht, Peter, 38442 Wolfsburg (DE); Moritz, Ruby, 38440 Wolfsburg (DE)

(56) Entgegenhaltungen:
- DE-A1- 102016 000 493
- DE-A1- 102016 015 401
- US-A1- 2018 053 091

## Beschreibung

Die vorliegende Erfindung betrifft ein Verfahren, ein Computerprogramm mit Instruktionen und eine Vorrichtung zum Konfigurieren eines Steuerungssystems für ein zumindest teilautonomes Kraftfahrzeug. Die Erfindung betrifft weiterhin ein Kraftfahrzeug, das ein solches Verfahren oder eine solche Vorrichtung nutzt.

Das (hoch-)automatisierte Fahren ist auf ein sicheres, zuverlässiges und echtzeitfähiges Fahrzeugsystem angewiesen. Dazu ist es unerlässlich, zum Zwecke der Ausfallsicherheit zentrale Funktionen redundant auszuführen. Hierbei werden im Kraftfahrzeug mehrfach vorgehaltene Ressourcen genutzt, ohne dadurch jedoch die eigentliche Qualität der Funktion zu verbessern. Je mehr Ressourcen diese Funktionen benötigen, desto größer wird diese Diskrepanz zwischen Kosten und Nutzen im Kraftfahrzeug. Dies gilt insbesondere für Funktionen, die auf künstlicher Intelligenz (Kl) beruhen, z.B. auf Deep Learning (auf Deutsch etwa: tiefgehendes Lernen) basierende Kl-Funktionen.

Vor diesem Hintergrund beschreibt DE 10 2017 006 599 A1 ein Verfahren zum Betrieb eines zumindest teilautomatisiert fahrenden Kraftfahrzeugs. In dem Verfahren werden zumindest drei künstliche neuronale Netzwerke in disjunkten Trainingsfahrten des Kraftfahrzeugs unabhängig voneinander jeweils mittels eines Ende-zu-Ende-Ansatzes anhand von während der Trainingsfahrten aufgezeichneten Trainings-Aktordaten einer Fahrzeugaktorik und anhand von mit den Trainings-Aktordaten korrelierten Trainings-Sensordaten einer Fahrzeugsensorik trainiert. Im zumindest teilautomatisierten Betrieb des Kraftfahrzeugs werden Ist-Sensordaten als Eingangsdaten der neuronalen Netzwerke erfasst und den Ist-Sensordaten werden anhand eines Vergleichs mit den Trainings-Sensordaten Trainings-Aktordaten als Ausgangsdaten der neuronalen Netzwerke zugeordnet. Die Trainings-Aktordaten aller neuronalen Netzwerke werden einem Fusionsmodul zugeführt, welches die Trainings-Aktordaten aller neuronalen Netzwerke nach einer vorgegebenen Regel fusioniert und anhand eines Ergebnisses der Fusion Ist-Aktordaten ermittelt. Anhand einer Ansteuerung der Fahrzeugaktorik mit den ermittelten Ist-Aktordaten wird eine Quer- und/oder Längssteuerung des Kraftfahrzeugs zumindest teilautomatisiert durchgeführt.

Des Weiteren beschreibt DE 10 2017 107 837 A1 eine anpassbare Sensoranordnung. Die Sensoranordnung umfasst zumindest ein Sensorelement mit einer Steuer- und Auswertungseinheit. Die Sensordaten werden mit einem Klassifikator ausgewertet. Der Klassifikator weist ein neuronales Netz auf. Über eine Schnittstelle ist die Sensoranordnung mit einem übergeordneten Rechnernetzwerk verbindbar. Die Steuer- und Auswertungseinheit ist für eine Erweiterungsfunktion ausgebildet. Dazu überträgt die Sensoranordnung in einer Erweiterungsfunktion ausgewählte Sensordaten, die zusätzlich von dem Klassifikator verarbeitet werden sollen, an das Rechnernetzwerk. Dort wird auf Basis der Sensordaten ein Klassifikator trainiert, und nach Abschluss des Trainings erhält die Sensoranordnung Klassifikatordaten zur Modifikation des Klassifikators zurück, wie Parameter, Programmabschnitte oder sogar den gesamten trainierten Klassifikator. Damit ist die Sensoranordnung auch für die Klassifikation der ausgewählten Sensordaten gerüstet.

US 2018/0053091 A1 beschreibt ein Verfahren zur Auswahl und Implementierung eines neuronalen Netzwerks für ein eingebettetes System. Das Verfahren umfasst das Auswählen eines neuronalen Netzwerks aus einer Bibliothek von neuronalen Netzwerken basierend auf Parametern des eingebetteten Systems, wobei die Parameter die Auswahl des neuronalen Netzwerks einschränken. Das Verfahren umfasst zudem das Trainieren des neuronalen Netzwerks unter Verwendung eines Datensatzes. Das Verfahren umfasst ferner das Komprimieren des neuronalen Netzwerks für die Implementierung auf dem eingebetteten System.

Als weiteres Beispiel sei die Auswertung von Videodaten im Rahmen einer semantischen Segmentierung genannt. Nach aktuellem Stand der Technik sind hier Funktionen, die neuronale Netze nutzen, alternativlos.

Neuronale Netze benötigen nicht nur viel Rechenkapazität, sondern sind generell hoch komplex und deshalb äußerst schwer in ihrer Funktionsweise nachvollziehbar. Dieser Umstand stellt auch eine große Herausforderung im Bereich der Absicherung dar, die für sicherheitsrelevante Funktionen im automobilen Kontext notwendig ist. Die Absicherung eines unverstandenen Systems ist unmöglich.

Für konventionelle Algorithmen existieren Methoden, um ihre Korrektheit mathematisch zu beweisen. Bei der Verwendung von neuronalen Netzen erschöpfen sich diese Methoden allerdings, weshalb andere Herangehensweisen erforderlich sind.

KI-Modelle, die auf neuronalen Netzen basieren, haben abhängig von den Trainingsdaten und der Struktur der Modelle unterschiedliche Eigenschaften. Trainingsdaten können dabei z.B. Daten aus Trainingsfahrten oder synthetische Trainingsdaten sein. Die Eigenschaften der Kl-Modelle zeichnen sich insbesondere in funktionalen und nichtfunktionalen Qualitätsmerkmalen ab. Viele dieser Eigenschaften sind sicherheitsrelevant, z.B. die kontextuelle Abhängigkeit der funktionalen Güte, die Stabilität der Funktion, etc. Hierbei ist es nahezu ausgeschlossen, ein Kl-Modell zu entwickeln, das alle sicherheitsrelevanten Fähigkeiten ausreichend ausgeprägt hat, um einem hinnehmbaren Sicherheitskonzept gerecht zu werden. Wechselnde Anforderungen, die während des Fahrbetriebes aufkommen, erfordern darüber hinaus unterschiedlich starke Ausprägungen bestimmter Fähigkeiten im dynamischen Wechsel.

Derzeitige Ansätze bei der Nutzung künstlicher Intelligenz in Kraftfahrzeugen beschränken sich auf die Verwendung eines einzelnen KI-Moduls oder eines Ensembles von Kl-Modulen und dessen Optimierung. Unter einem KI-Modul ist hier eine Softwarekomponente zu verstehen, in der ein Kl-Modell umgesetzt ist. Konzepte für Redundanz werden klassisch, wie in der Luftfahrt, über ein mehrfaches Ausführen in Verbindung mit Monitoringsystemen gelöst. Hierbei werden identische Softwarekomponenten doppelt oder dreifach synchron ausgeführt und deren Ergebnisse entsprechend verglichen und genutzt.

Allerdings wurden diese Konzepte für Redundanz nicht für KI-Module entwickelt, sondern für Softwarekomponenten, deren Laufverhalten vergleichsweise einfach zu überprüfen ist. KI-Module decken in ihrer Funktionalität einen Graubereich zwischen "Richtig" und "Falsch" ab, der von diesen Redundanzkonzepten ignoriert wird.

DE 10 2016 000 493 A1 beschreibt ein Verfahren zum Betrieb eines zur vollautomatischen Führung eines Kraftfahrzeugs in verschiedenen Fahrsituationsklassen ausgebildeten Fahrzeugsystems des Kraftfahrzeugs. Bei dem Verfahren wird eine mehrere Auswertungseinheiten umfassende Berechnungsstruktur verwendet, um aus die Umgebung des Kraftfahrzeugs beschreibenden Umgebungsdaten und den Zustand des Kraftfahrzeugs beschreibenden Egodaten als Fahrsituationsdaten zur vollautomatischen Führung des Kraftfahrzeugs zu verwendende Steuerdaten zu ermitteln und zur Führung des Kraftfahrzeugs zu verwenden. Jede Auswertungseinheit ermittelt dabei aus Ausgangsdaten wenigstens einer weiteren Auswertungseinheit oder aus Fahrsituationsdaten Ausgangsdaten. Wenigstens ein Teil der Auswertungseinheiten sind als neuronales Netz wenigstens teilweise auf Softwarebasis ausgebildet. Wenigstens ein Teil der als neuronales Netz ausgebildeten Auswertungseinheiten wird während der Laufzeit dynamisch aus einem über Konfigurationsparametersätze konfigurierbaren Konfigurationsobjekt gebildet. Dazu wird unter Verwendung wenigstens eines Teils der Fahrsituationsparameter eine aktuelle Fahrsituationsklasse aus mehreren vorgegebenen Fahrsituationsklassen ermittelt. Jeder Fahrsituationsklasse ist wenigstens eine Auswertungsfunktion zugeordnet. Aus einer Datenbank werden dann den Auswertungsfunktionen der aktuellen Fahrsituationsklasse zugeordnete Konfigurationsparametersätze abgerufen. Noch nicht vorhandene, die Auswertungsfunktion durchführende Auswertungseinheiten werden schließlich durch Konfiguration von Konfigurationsobjekten mit den abgerufenen Konfigurationsparametersätzen gebildet.

Es ist eine Aufgabe der Erfindung, ein verbessertes Konzept zum Konfigurieren eines Steuerungssystems für ein zumindest teilautonomes Kraftfahrzeug aufzuzeigen.

Diese Aufgabe wird durch ein Verfahren mit den Merkmalen des Anspruchs 1, durch ein Computerprogramm mit Instruktionen gemäß Anspruch 6 sowie durch eine Vorrichtung mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zum Konfigurieren eines Steuerungssystems für ein zumindest teilautonomes Kraftfahrzeug die Schritte:
- Auswählen von zwei oder mehr Kl-Modulen aus einer Bibliothek von Kl-Modulen während des Fahrbetriebs auf Basis von Auswahlkriterien, wobei die Auswahlkriterien funktionale Eigenschaften der KI-Module betreffend eine Objekterkennung durch die KI-Module und nicht-funktionale Eigenschaften der KI-Module betreffend eine benötigte Rechenkapazität der KI-Module betreffen; und
- Initiieren einer Ausführung der zwei oder mehr KI-Module durch das Steuerungssystem, wobei bei der der Ausführung der KI-Module Eigenschaften der zwei oder mehr Kl-Module für eine Aggregation der Ergebnisse der zwei oder mehr KI-Module für einen aktuellen Kontext verwendet werden.

Gemäß einem weiteren Aspekt der Erfindung umfasst ein Computerprogramm Instruktionen, die bei Ausführung durch einen Computer den Computer zur Ausführung der folgenden Schritte zum Konfigurieren eines Steuerungssystems für ein zumindest teilautonomes Kraftfahrzeug veranlassen:
- Auswählen von zwei oder mehr KI-Modulen aus einer Bibliothek von Kl-Modulen während des Fahrbetriebs auf Basis von Auswahlkriterien, wobei die Auswahlkriterien funktionale Eigenschaften der KI-Module betreffend eine Objekterkennung durch die KI-Module und nicht-funktionale Eigenschaften der KI-Module betreffend eine benötigte Rechenkapazität der KI-Module betreffen; und
- Initiieren einer Ausführung der zwei oder mehr KI-Module durch das Steuerungssystem, wobei bei der der Ausführung der KI-Module Eigenschaften der zwei oder mehr Kl-Module für eine Aggregation der Ergebnisse der zwei oder mehr KI-Module für einen aktuellen Kontext verwendet werden.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Konfigurieren eines Steuerungssystems für ein zumindest teilautonomes Kraftfahrzeug auf:
- eine Auswahleinheit zum Auswählen von zwei oder mehr Kl-Modulen aus einer Bibliothek von Kl-Modulen während des Fahrbetriebs auf Basis von Auswahlkriterien, wobei die Auswahlkriterien funktionale Eigenschaften der KI-Module betreffend eine Objekterkennung durch die KI-Module und nicht-funktionale Eigenschaften der KI-Module betreffend eine benötigte Rechenkapazität der KI-Module betreffen; und
- eine Ausführungssteuerung zum Initiieren einer Ausführung der zwei oder mehr KI-Module durch das Steuerungssystem, wobei bei der der Ausführung der KI-Module Eigenschaften der zwei oder mehr KI-Module für eine Aggregation der Ergebnisse der zwei oder mehr Kl-Module für einen aktuellen Kontext verwendet werden.

Bisherige Ansätze beschränken sich auf die Nutzung eines Kl-Modells für eine bestimmte Funktion, das für alle durchfahrenen Szenarien unverändert angewendet wird. Der erfindungsgemäße Ansatz konzentriert sich hingegen nicht darauf, eine Funktion zu entwickeln, die in allen Situationen gut und sicher arbeitet, sondern eine Menge von guten Funktionen zu kombinieren. Die verschiedenen KI-Module werden auf Fahrzeugseite dynamisch miteinander kombiniert und redundant ausgeführt. Dabei kann jedes verfügbare KI-Modul in das Fahrzeugsystem integriert werden, unabhängig davon, ob es intern oder extern entwickelt wurde. Eine inhärente Eigenschaft dieses Vorgehens besteht darin, dass mindestens immer so gute Ergebnisse geliefert werden, wie die der besten in der Auswahl enthaltenen Funktion. In der Regel sind die Ergebnisse durch die dynamische Auswahl allerdings besser als die, die jede durch das Steuerungssystem ausgeführte Funktion für sich allein genommen liefert. Es wird somit eine Steigerung der Gesamtperformanz gegenüber der Performanz der einzelnen Module erzielt. Die erfindungsgemäße Lösung zeichnet sich insbesondere durch ihre hohe Systemverfügbarkeit, ihre Sicherheit und ihre Anpassungsfähigkeit aus.

Die KI-Module werden im Kraftfahrzeug in einer Bibliothek bereitgestellt, in der durchaus hundert oder mehr KI-Module gespeichert sein können. Aus dieser Bibliothek werden auf Basis der Auswahlkriterien mehrere KI-Module für den aktiven Betrieb auswählt. Die zukünftig in Kraftfahrzeugen verfügbaren Rechenkapazitäten werden ausreichen, um z.B. drei bis vier Kl-Modelle parallel betreiben zu können. Zur generellen Absicherung relevanter Funktionen liegen diese redundant vor, um etwaige Ausfälle oder Fehler kompensieren zu können, d.h. es stehen verschiedene KI-Module zur Verfügung, die dieselbe Funktion erfüllen. Die Redundanz erlaubt eine synchrone Qualitätskontrolle der aktiven KI-Module und einen a-priori bekannten Effizienz- oder Effektivitätsverlust bei einem fehlerbedingten Ausfall eines oder mehrerer KI-Module.

Bei der Kombination der KI-Module im Kraftfahrzeug werden dabei mehrere Zielsetzungen verfolgt, die ebenfalls entweder funktionaler oder nicht-funktionaler Natur sind. Insbesondere ist es nicht zwangsläufig notwendig, sich für das Ergebnis eines der redundant vorhandenen KI-Module zu entscheiden. Vielmehr ist auch ein Kombinieren der einzelnen Ergebnisse zum Zwecke der gesteigerten funktionalen und nicht-funktionalen Güte möglich.

Die Auswahlkriterien betreffen Eigenschaften der KI-Module, die beeinflussen, welche der verfügbaren KI-Module für eine gegebene Situation genutzt werden sollten. Die Eigenschaften der der KI-Module betreffen funktionale Eigenschaften der KI-Module betreffend die Objekterkennung durch die KI-Module, z.B. die Erkennung spezieller Objekte, die Erkennung seltener Objekte, die Erkennung verdeckter Objekte, die Konsistenz der Erkennung, etc. Die Eigenschaften der der KI-Module betreffen zudem nicht-funktionale Eigenschaften der KI-Module betreffend die erforderliche Rechenkapazität. Durch die Berücksichtigung dieser Auswahlkriterien kann eine optimale Systemperformanz für jede Situation erreicht werden.

Erfindungsgemäß werden Eigenschaften der zwei oder mehr KI-Module für eine Aggregation der Ergebnisse der zwei oder mehr KI-Module für einen aktuellen Kontext verwendet. Die Aggregation kann beispielsweise durch ein Verrechnen, ein Ersetzen oder eine objektweise oder klassenweise Auswahl der Ergebnisse der zwei oder mehr KI-Module erfolgen. Die Nutzung der Eigenschaften der KI-Module bzw. der zugrundeliegenden Kl-Modelle für eine Aggregation erlaubt es, für den aktuellen Kontext die optimale Ausgabe zu erzeugen. Dabei werden beispielsweise die Eigenschaften verwendet, die Informationen zur Güte der einzelnen Module in Hinsicht auf bestimmte Segmentierungsklassen oder bestimmte Kontexte beinhalten. Zum Beispiel kann ein Kl-Modell eine höhere Güte für die Segmentierung von Fußgängern in einer städtischen Umgebung in der Nacht aufweisen. Dies kann durch einen höheren Konfidenzwert in den Moduleigenschaften abgelegt sein.

Gemäß einem Aspekt der Erfindung erfolgt eine Bewertung der KI-Module durch ein Backend. Hierzu wird das KI-Modul bzw. das zugrundeliegende Kl-Modell von der Backendseite auf bestimmte Eigenschaften geprüft und aussagekräftig und in Abhängigkeit des semantischen Kontextes bewertet. Als semantischer Kontext kommen beispielsweise die Fahrsituation, die Umwelt, das Wetter, die Tageszeit, etc. in Betracht. Die Ergebnisse der Bewertung werden in den Moduleigenschaften abgelegt und können vom Kraftfahrzeug für die Modulauswahl genutzt werden. Durch das Backend können zudem neue oder veränderte KI-Module an das Kraftfahrzeug übermittelt werden.

Gemäß einem Aspekt der Erfindung bleibt beim Starten eines neu gewählten KI-Moduls ein zu ersetzendes KI-Modul so lange aktiv, bis das neu gewählte KI-Modul vollständig gestartet ist. Während ein KI-Modul gestartet wird, ist es noch nicht voll einsatzbereit, benötigt aber bereits Rechenkapazitäten. Wird nun eines der aktiven KI-Module durch ein bisher inaktives ausgetauscht, bleibt das auszutauschende KI-Modul noch so lange aktiv, bis das neue KI-Modul vollständig hochgefahren wurde. Hierbei werden kurzfristig zwar mehr Rechenkapazitäten beansprucht, mittelfristig wird auf diese Weise aber ein robustes und sicheres System ermöglicht.

Gemäß einem Aspekt der Erfindung werden drei oder vier redundante KI-Module zur Ausführung ausgewählt. Durch den parallelen Betrieb von drei bis vier KI-Modulen werden die zukünftig in Kraftfahrzeugen verfügbaren Rechenkapazitäten optimal ausgenutzt.

Besonders vorteilhaft wird ein erfindungsgemäßes Verfahren oder eine erfindungsgemäße Vorrichtung in einem Kraftfahrzeug eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Konfigurieren eines Steuerungssystems für ein zumindest teilautonomes Kraftfahrzeug;
- Fig. 2: zeigt eine erste Ausführungsform einer Vorrichtung zum Konfigurieren eines Steuerungssystems für ein zumindest teilautonomes Kraftfahrzeug;
- Fig. 3: zeigt eine zweite Ausführungsform einer Vorrichtung zum Konfigurieren eines Steuerungssystems für ein zumindest teilautonomes Kraftfahrzeug;
- Fig. 4: stellt schematisch ein Kraftfahrzeug dar, in dem eine erfindungsgemäße Lösung realisiert ist;
- Fig. 5: zeigt schematisch ein Systemdiagramm einer erfindungsgemäßen Lösung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

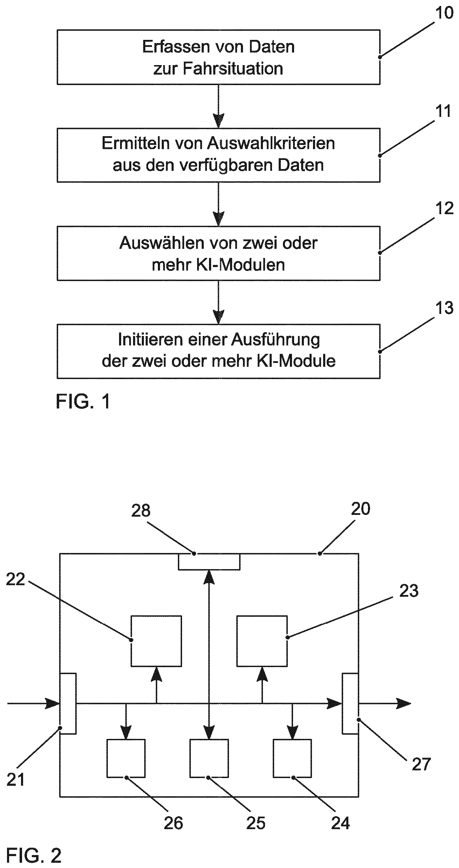

Fig. 1 zeigt schematisch ein Verfahren zum Konfigurieren eines Steuerungssystems für ein zumindest teilautonomes Kraftfahrzeug. In einem ersten Schritt 10 werden Daten zur Fahrsituation erfasst. Dies können beispielsweise Umgebungsdaten einer im Kraftfahrzeug verbauten Umfeldsensorik oder Betriebsparameter des Kraftfahrzeugs sein, die von Steuergeräten zur Verfügung gestellt werden. Aus den verfügbaren Daten werden dann Auswahlkriterien ermittelt 11. Die Auswahlkriterien betreffen funktionale Eigenschaften der KI-Module betreffend die Objekterkennung durch die KI-Module und nicht-funktionale Eigenschaften der KI-Module betreffend eine benötigte Rechenkapazität der KI-Module. Dabei können gegebenenfalls zusätzliche Randbedingungen, z.B. eine verfügbare Rechenkapazität, berücksichtigt werden. Auf Basis der Auswahlkriterien werden während des Fahrbetriebs zwei oder mehr KI-Module aus einer Bibliothek von KI-Modulen ausgewählt 12. Vorzugsweise werden dabei drei oder vier redundante KI-Module ausgewählt. Schließlich wird eine Ausführung der ausgewählten zwei oder mehr KI-Module durch das Steuerungssystem initiiert 13. Bei der Ausführung der KI-Module werden Eigenschaften der KI-Module für eine Aggregation der Ergebnisse der KI-Module für einen aktuellen Kontext verwendet. Die Aggregation kann z.B. durch ein Verrechnen, ein Ersetzen oder eine objektweise oder klassenweise Auswahl der Ergebnisse der KI-Module erfolgen. Vorzugsweise bleibt beim Starten eines neu gewählten KI-Moduls ein zu ersetzendes KI-Modul so lange aktiv, bis das neu gewählte KI-Modul vollständig gestartet ist.

Fig. 2 zeigt eine vereinfachte schematische Darstellung einer ersten Ausführungsform einer Vorrichtung 20 zum Konfigurieren eines Steuerungssystems für ein zumindest teilautonomes Kraftfahrzeug. Die Vorrichtung 20 hat einen Eingang 21, über den Daten zur Fahrsituation empfangen werden können. Dies können beispielsweise Umgebungsdaten einer im Kraftfahrzeug verbauten Umfeldsensorik oder Betriebsparameter des Kraftfahrzeugs sein, die von Steuergeräten zur Verfügung gestellt werden. Eine Auswerteeinheit 22 ermittelt dann Auswahlkriterien aus den verfügbaren Daten. Die Auswahlkriterien betreffen funktionale Eigenschaften der KI-Module betreffend die Objekterkennung durch die KI-Module und nicht-funktionale Eigenschaften der KI-Module betreffend eine benötigte Rechenkapazität der Kl-Module. Dabei können gegebenenfalls zusätzliche Randbedingungen, z.B. eine verfügbare Rechenkapazität, berücksichtigt werden. Auf Basis der Auswahlkriterien wählt eine Auswahleinheit 23 während des Fahrbetriebs zwei oder mehr KI-Module aus einer Bibliothek von KI-Modulen aus. Vorzugsweise werden drei oder vier redundante KI-Module durch die Auswahleinheit 23 ausgewählt. Die Bibliothek kann z.B. in einem Speicher 26 der Vorrichtung 20 abgelegt sein. Eine Ausführungssteuerung 24 initiiert eine Ausführung der zwei oder mehr KI-Module durch das Steuerungssystem. Über einen Ausgang 27 der Vorrichtung 20 wird das Steuerungssystem für eine weitere Nutzung bereitgestellt. Dazu können beispielsweise direkt die genutzten KI-Module an einen Prozessor ausgegeben werden. Alternativ können lediglich Informationen an einen Prozessor ausgegeben werden, welche KI-Module geladen werden sollen. Bei der Ausführung der KI-Module werden Eigenschaften der KI-Module für eine Aggregation der Ergebnisse der KI-Module für einen aktuellen Kontext verwendet. Die Aggregation kann z.B. durch ein Verrechnen, ein Ersetzen oder eine objektweise oder klassenweise Auswahl der Ergebnisse der KI-Module erfolgen. Vorzugsweise sorgt die Ausführungssteuerung 24 dafür, dass beim Starten eines neu gewählten KI-Moduls ein zu ersetzendes KI-Modul so lange aktiv bleibt, bis das neu gewählte KI-Modul vollständig gestartet ist.

Die Auswerteeinheit 22, die Auswahleinheit 23 und die Ausführungssteuerung 24 können von einer Kontrolleinheit 25 gesteuert werden. Über eine Benutzerschnittstelle 28 können gegebenenfalls Einstellungen der Auswerteeinheit 22, der Auswahleinheit 23, der Ausführungssteuerung 24 oder der Kontrolleinheit 25 geändert werden. Die in der Vorrichtung 20 anfallenden Daten können bei Bedarf im Speicher 26 abgelegt werden, beispielsweise für eine spätere Auswertung oder für eine Nutzung durch die Komponenten der Vorrichtung 20. Die Auswerteeinheit 22, die Auswahleinheit 23, die Ausführungssteuerung 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

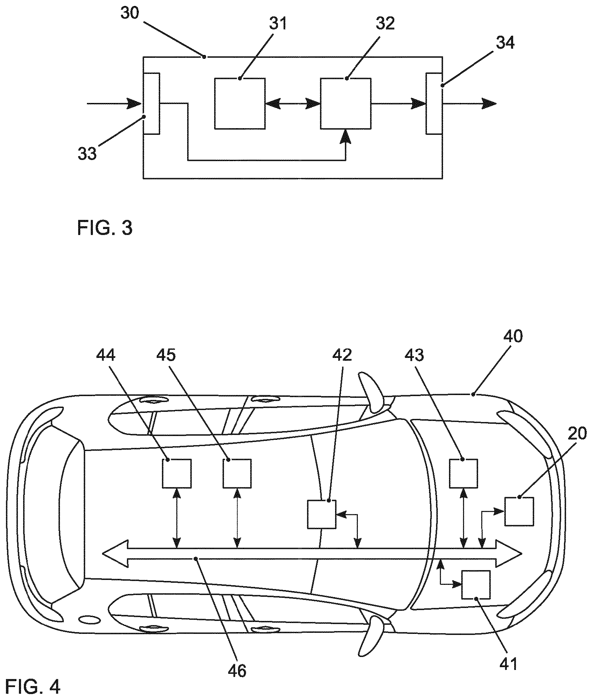

Fig. 3 zeigt eine vereinfachte schematische Darstellung einer zweiten Ausführungsform einer Vorrichtung 30 zum Konfigurieren eines Steuerungssystems für ein zumindest teilautonomes Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Umgebungsdaten oder Betriebsparametern des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist ein Steuerungssystem 41 für den automatisierten oder hochautomatisierten Fahrbetrieb auf, das durch eine Vorrichtung 20 konfiguriert wird. In Fig. 4 ist die Vorrichtung 20 eine eigenständige Komponente, sie kann aber auch im Steuerungssystem 41 integriert sein. Zum Auswählen von Kl-Modulen aus einer Bibliothek von KI-Modulen nutzt die Vorrichtung 20 Daten zur Fahrsituation. Dies können beispielsweise Umgebungsdaten einer im Kraftfahrzeug 40 verbauten Umfeldsensorik 42 oder Betriebsparameter des Kraftfahrzeugs 40 sein, die von Steuergeräten 43 zur Verfügung gestellt werden. Eine weitere Komponente des Kraftfahrzeugs 40 ist eine Datenübertragungseinheit 44, über die u.a. eine Verbindung zu einem Backend aufgebaut werden kann, z.B. um zusätzliche oder veränderte KI-Module zu beziehen. Zur Speicherung der Bibliothek von Kl-Modulen oder weiterer Daten ist ein Speicher 45 vorhanden. Der Datenaustausch zwischen den verschiedenen Komponenten des Kraftfahrzeugs 40 erfolgt über ein Netzwerk 46.

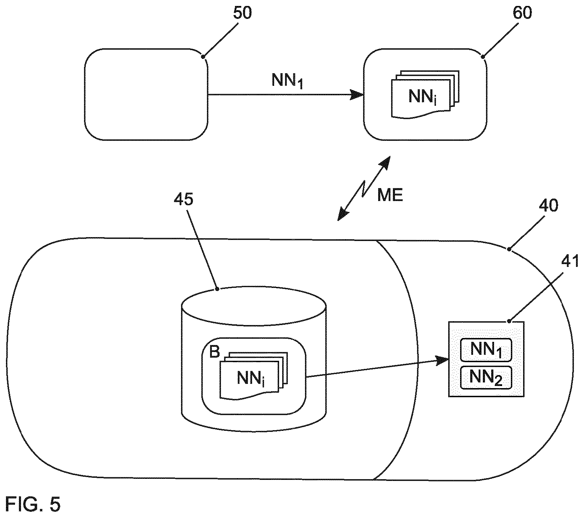

Fig. 5 zeigt schematisch ein Systemdiagramm einer erfindungsgemäßen Lösung. Das System umfasst ein Kraftfahrzeug 40, eine externe Quelle 50 von Kl-Modulen NNᵢ sowie ein Backend 60. In einem Speicher 45 des Kraftfahrzeugs 40 wird eine Bibliothek B von Kl-Modulen NNᵢ bereitgehalten. Diese können intern von einem Hersteller des Kraftfahrzeugs 40 entwickelt worden sein oder aus der externen Quelle 50 stammen. Im Beispiel wird von der externen Quelle 50 das KI-Modul NN₁ bereitgestellt. Unabhängig von der Herkunft erfolgt eine Bewertung der KI-Module NNᵢ durch das Backend 60. Dabei werden durch das Backend 60 funktionale Eigenschaften der KI-Module NNᵢ betreffend die Objekterkennung durch die KI-Module NNᵢ und nicht-funktionale Eigenschaften der KI-Module NNᵢ betreffend eine benötigte Rechenkapazität der KI-Module betrachtet. Beispiele für funktionale Eigenschaften betreffend die Objekterkennung sind z.B. die Erkennung spezieller Objekte, die Erkennung seltener Objekte, die Erkennung verdeckter Objekte, die Konsistenz der Erkennung, etc. Die resultierenden Bewertungen der KI-Module NNᵢ werden in der Bibliothek B als Moduleigenschaften ME abgelegt. Anhand von Auswahlkriterien und eines Abgleichs mit den Moduleigenschaften ME werden auf Fahrzeugseite verschiedene KI-Module dynamisch miteinander kombiniert und redundant durch ein Steuerungssystem 41 des Kraftfahrzeugs 40 ausgeführt. Im Beispiel sind dies die beiden KI-Module NN₁ und NN₂.

### Bezugszeichenliste

- 10: Erfassen von Daten zur Fahrsituation
- 11: Ermitteln von Auswahlkriterien aus den verfügbaren Daten
- 12: Auswählen von zwei oder mehr KI-Modulen
- 13: Initiieren einer Ausführung der zwei oder mehr KI-Module
- 20: Vorrichtung
- 21: Eingang
- 22: Auswerteeinheit
- 23: Auswahleinheit
- 24: Ausführungssteuerung
- 25: Kontrolleinheit
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Kraftfahrzeug
- 41: Steuerungssystem
- 42: Umfeldsensorik
- 43: Steuergerät
- 44: Datenübertragungseinheit
- 45: Speicher
- 46: Netzwerk
- 50: Externe Quelle
- 60: Backend
- B: Bibliothek
- ME: Moduleigenschaften
- NNᵢ: Kl-Modul

## Patentansprüche

1. Verfahren zum Konfigurieren eines Steuerungssystems (41) für ein zumindest teilautonomes Kraftfahrzeug (40), mit den Schritten:
- Auswählen (12) von zwei oder mehr KI-Modulen (NNᵢ) aus einer Bibliothek (B) von KI-Modulen während des Fahrbetriebs auf Basis von Auswahlkriterien, wobei die Auswahlkriterien zumindest funktionale Eigenschaften der KI-Module (NNᵢ) betreffend eine Objekterkennung durch die KI-Module (NNᵢ) betreffen; und
- Initiieren (13) einer Ausführung der zwei oder mehr KI-Module (NNᵢ) durch das Steuerungssystem (41);
**dadurch gekennzeichnet, dass** die Auswahlkriterien zudem nicht-funktionale Eigenschaften der KI-Module (NNᵢ) betreffend eine benötigte Rechenkapazität der Kl-Module (NNᵢ) betreffen, und dass bei der der Ausführung der KI-Module (NNᵢ) Eigenschaften der zwei oder mehr KI-Module (NNᵢ) für eine Aggregation der Ergebnisse der zwei oder mehr KI-Module (NNᵢ) für einen aktuellen Kontext verwendet werden.

2. Verfahren gemäß Anspruch 1, wobei eine Bewertung der KI-Module (NNᵢ) durch ein Backend (60) erfolgt.

3. Verfahren gemäß Anspruch 1 oder 2, wobei die Aggregation durch ein Verrechnen, ein Ersetzen oder eine objektweise oder klassenweise Auswahl der Ergebnisse der zwei oder mehr KI-Module (NNᵢ) erfolgt.

4. Verfahren gemäß einem der vorherigen Ansprüche, wobei beim Starten eines neu gewählten KI-Moduls (NNᵢ) ein zu ersetzendes KI-Modul (NNᵢ) so lange aktiv bleibt, bis das neu gewählte KI-Modul (NNᵢ) vollständig gestartet ist.

5. Verfahren gemäß einem der vorherigen Ansprüche, wobei drei oder vier redundante KI-Module (NNᵢ) zur Ausführung ausgewählt (12) werden.

6. Computerprogramm mit Instruktionen, die bei Ausführung durch einen Computer den Computer zur Ausführung der Schritte eines Verfahrens gemäß einem der Ansprüche 1 bis 5 zum Konfigurieren eines Steuerungssystems (41) für ein zumindest teilautonomes Kraftfahrzeug (40) veranlassen.

7. Vorrichtung (20) zum Konfigurieren eines Steuerungssystems (41) für ein zumindest teilautonomes Kraftfahrzeug (40), mit:
- einer Auswahleinheit (23) zum Auswählen (12) von zwei oder mehr KI-Modulen (NNᵢ) aus einer Bibliothek (B) von Kl-Modulen während des Fahrbetriebs auf Basis von Auswahlkriterien, wobei die Auswahlkriterien zumindest funktionale Eigenschaften der KI-Module (NNᵢ) betreffend eine Objekterkennung durch die KI-Module (NNᵢ) betreffen; und
- einer Ausführungssteuerung (24) zum Initiieren (13) einer Ausführung der zwei oder mehr KI-Module (NNᵢ) durch das Steuerungssystem (41);
**dadurch gekennzeichnet, dass** die Auswahlkriterien zudem nicht-funktionale Eigenschaften der KI-Module (NNᵢ) betreffend eine benötigte Rechenkapazität der Kl-Module (NNᵢ) betreffen, und dass bei der der Ausführung der KI-Module (NNᵢ) Eigenschaften der zwei oder mehr KI-Module (NNᵢ) für eine Aggregation der Ergebnisse der zwei oder mehr KI-Module (NNᵢ) für einen aktuellen Kontext verwendet werden.

## Claims

1. Method for configuring a control system (41) for an at least partially autonomous motor vehicle (40), which method comprises the steps of:
- selecting (12) two or more AI modules (NNᵢ) from a library (B) of AI modules during driving operation, on the basis of selection criteria, wherein the selection criteria relate to at least functional properties of the AI modules (NNᵢ) relating to object recognition by the Al modules (NNᵢ); and
- initiating (13) execution of the two or more AI modules (NNᵢ) by the control system (41);
**characterized in that** the selection criteria also relate to non-functional properties of the AI modules (NNᵢ) relating to a required computing capacity of the AI modules (NNᵢ), and **in that,** during the execution of the Al modules (NNᵢ), properties of the two or more Al modules (NNᵢ) are used for aggregating the results of the two or more AI modules (NNᵢ) for a current context.

2. Method according to claim 1, wherein the AI modules (NNᵢ) are evaluated by a backend (60).

3. Method according to claim 1 or 2, wherein the aggregation is performed by calculating, replacing or selecting, by object or by class, the results of the two or more AI modules (NNᵢ).

4. Method according to any of the preceding claims, wherein, when a newly selected Al module (NNᵢ) is started, an Al module (NNᵢ) to be replaced remains active until the newly selected Al module (NNᵢ) has been fully started.

5. Method according to any of the preceding claims, wherein three or four redundant Al modules (NNᵢ) are selected (12) for execution.

6. Computer program having instructions which, when executed by a computer, cause the computer to execute the steps of a method according to any of claims 1 to 5 for configuring a control system (41) for an at least partially autonomous motor vehicle (40).

7. Device (20) for configuring a control system (41) for an at least partially autonomous motor vehicle (40), which device comprises:
- a selection unit (23) for selecting (12) two or more AI modules (NNᵢ) from a library (B) of AI modules during driving operation, on the basis of selection criteria, wherein the selection criteria relate to at least functional properties of the AI modules (NNᵢ) relating to object recognition by the AI modules (NNᵢ); and
- an execution controller (24) for initiating (13) execution of the two or more AI modules (NNᵢ) by the control system (41);
**characterized in that** the selection criteria also relate to non-functional properties of the AI modules (NNᵢ) relating to a required computing capacity of the Al modules (NNᵢ), and **in that,** during the execution of the Al modules (NNᵢ), properties of the two or more AI modules (NNᵢ) are used for aggregating the results of the two or more AI modules (NNᵢ) for a current context.

## Revendications

1. Procédé pour la configuration d'un système de commande (41) pour un véhicule automobile au moins partiellement autonome (40), comportant les étapes consistant à :
- sélectionner (12) deux modules IA (NNᵢ) ou plus à partir d'une bibliothèque (B) de modules IA pendant le fonctionnement de conduite sur la base de critères de sélection, dans lequel les critères de sélection concernent au moins des propriétés fonctionnelles des modules IA (NNᵢ) concernant une reconnaissance d'objet par les modules IA (NNᵢ) ; et
- initier (13) une exécution des deux modules IA (NNᵢ) ou plus par le système de commande (41) ;
**caractérisé en ce que** les critères de sélection concernent en outre des propriétés non fonctionnelles des modules IA (NNᵢ) concernant une capacité de calcul nécessaire des modules IA (NNᵢ), **et en ce que,** lors de l'exécution des modules IA (NNᵢ), des propriétés des deux modules IA (NNᵢ) ou plus sont utilisées pour une agrégation des résultats des deux modules IA (NNᵢ) ou plus pour un contexte actuel.

2. Procédé selon la revendication 1, dans lequel une évaluation des modules IA (NNᵢ) est effectuée par une application dorsale (60).

3. Procédé selon la revendication 1 ou 2, dans lequel l'agrégation est effectuée par une compensation, un remplacement ou une sélection objet par objet ou classe par classe des résultats des deux modules IA (NNᵢ) ou plus.

4. Procédé selon l'une des revendications précédentes, dans lequel, lors du démarrage d'un module IA (NNᵢ) nouvellement sélectionné, un module IA (NNᵢ) à remplacer reste actif jusqu'à ce que le module IA (NNᵢ) nouvellement sélectionné ait complètement démarré.

5. Procédé selon l'une des revendications précédentes, dans lequel trois ou quatre modules IA (NNᵢ) redondants sont sélectionnés (12) pour être exécutés.

6. Programme informatique comportant des instructions, lesquelles, lors de leur exécution par un ordinateur, amènent l'ordinateur à exécuter les étapes d'un procédé selon l'une des revendications 1 à 5 pour la configuration d'un système de commande (41) pour un véhicule automobile au moins partiellement autonome (40).

7. Dispositif (20) pour la configuration d'un système de commande (41) pour un véhicule automobile au moins partiellement autonome (40), comportant :
- une unité de sélection (23) pour la sélection (12) de deux modules IA (NNᵢ) ou plus à partir d'une bibliothèque (B) de modules IA pendant le fonctionnement de conduite sur la base de critères de sélection, dans lequel les critères de sélection concernent au moins des propriétés fonctionnelles des modules IA (NNᵢ) concernant une reconnaissance d'objet par les modules IA (NNᵢ) ; et
- une commande d'exécution (24) pour l'initiation (13) d'une exécution des deux modules IA (NNᵢ) ou plus par le système de commande (41) ;
**caractérisé en ce que** les critères de sélection concernent en outre des propriétés non fonctionnelles des modules IA (NNᵢ) concernant une capacité de calcul nécessaire des modules IA (NNᵢ), **et en ce que,** lors de l'exécution des modules IA (NNᵢ), des propriétés des deux modules IA (NNᵢ) ou plus sont utilisées pour une agrégation des résultats des deux modules IA (NNᵢ) ou plus pour un contexte actuel.
